# EUROPÄISCHE PATENTSCHRIFT

(11) **EP 0 868 672 B1**
(45) Veröffentlichungstag und Bekanntmachung des Hinweises auf die Patenterteilung: **28.06.2000**
(21) Anmeldenummer: 96940694.1
(22) Anmeldetag: 20.12.1996
(51) Int. Cl.: G02B 6/38, G02B 6/42

(54) **VORRICHTUNG ZUM FIXIEREN UND POSITIONIEREN EINES LICHTLEITFASERENDES UND VERWENDUNG**
DEVICE FOR FIXING AND POSITIONING AN OPTICAL FIBRE END AND USE OF SAID DEVICE
DISPOSITIF POUR FIXER ET POSITIONNER UNE EXTREMITE DE FIBRE OPTIQUE ET UTILISATION DUDIT DISPOSITIF

(30) Priorität: 22.12.1995 DE 19548502; 18.10.1996 EP 96116751
(43) Veröffentlichungstag der Anmeldung: 07.10.1998
(60) Teilanmeldung: 99108311.4
(73) Patentinhaber: THE WHITAKER CORPORATION, Wilmington, Delaware 19808 (US)
(72) Erfinder: HULTERMANS, Antonius, Petrus, Cornelius, Maria, NL-5032 CL Tilburg (NL); VERGEEST, Henricus, Jozef, NL-5213 XH 's-Hertogenbosch (NL); WEBER, Klaus, D-64625 Bensheim (DE)
(74) Vertreter: Heinz-Schäfer, Marion
(86) Internationale Anmeldenummer: IB9601455
(87) Internationale Veröffentlichungsnummer: WO9723795

(56) Entgegenhaltungen:
- EP-A- 0 534 431
- EP-A- 0 542 011
- EP-A- 0 554 849
- DE-A- 3 910 166
- PATENT ABSTRACTS OF JAPAN Bd. 012, Nr. 456 (P-793) 30 November 1988 & JP 63 179 304 A (FUJI ELECTRIC CO LTD) 23 Juli 1988

## Beschreibung

Die Erfindung betrifft eine Vorrichtung zum Fixieren und Positionieren eines Lichtleitfaserendes, das in einer Hülse gefasst ist, wobei das Lichtleitfaserende eine abgeschrägte Stirnfläche aufweist und die Stirnfläche der Hülse zumindest nahe dem Lichtleitfaserende bereichsweise abgeschrägt ist, wobei ein hohlzylindrischer Körper vorgesehen ist, in den die Hülse der Vorrichtung koaxial einbringbar ist und der an einem Ende einen Anschlag mit einer koaxialen Bohrung aufweist, und wobei die Bohrung derart ausgestaltet ist, dass bei eingebrachter Hülse der abgeschrägte Bereich der Stirnfläche der Hülse den Anschlag berührt.

Die Erfindung betrifft weiter eine Vorrichtung zum Fixieren und Positionieren eines Lichtleitfaserendes, das in einer Hülse gefasst ist, wobei das Lichtleitfaserende eine zur optischen Achse abgeschrägt oder senkrecht verlaufende Stirnfläche aufweist und die Hülse auf der Seite mit der Stirnfläche des Lichtleitfaserendes eine Stirnfläche aufweist, die zumindest nahe dem Lichtleitfaserende koplanar zur Stirnfläche ausgebildet ist, wobei ein hohlzylindrischer Körper vorgesehen ist, in den die Hülse koaxial einbringbar ist und der an einem Ende einen Anschlag mit einer koaxialen Bohrung aufweist und wobei die Bohrung derart ausgestaltet ist, dass bei eingebrachter Hülse der koplanar zur Stirnfläche des Lichtwellenleiterendes ausgebildete Bereich der Stirnfläche der Hülse den Anschlag berührt.

Weiter betrifft die Erfindung eine Verwendung der Vorrichtungen.

In optischen Übertragungssystemen ist es bekannt, Lichtleitfaserenden an optoelektronische Elemente anzukoppeln. Dabei ist es vielfach nötig, dass das Lichtleitfaserende in Bezug auf die aktive Fläche des optoelektronischen Sende- oder Empfangselementes einjustiert wird. Da Rückreflexionen von Licht in das optoelektronische Element vermieden werden sollen, insbesondere bei der Ankopplung einer Lichtleitfaser an einen Laser, ist es bekannt, die Stirnfläche des Lichtleitfaserendes abzuschrägen. Durch die Neigung der Stirnfläche ist die Reflexion von aus dem Laser austretenden Licht an der Stirnfläche der Lichtleitfaser zurück in den Laser nicht mehr möglich.

Weiter ist es bekannt Lichtleitfaserenden in Hülsen, auch Stecker- oder Steckverbinderstifte genannt, zu fassen. Diese Hülsen sind entweder aus Keramik oder aus Metall hergestellt, sind sehr genau gearbeitet und gewährleisten die koaxiale Lage des Lichtwellenleiterendes zu ihrer Zylinderachse.

Aus der gattungsbildenden EP 542 011 A1 ist eine optische Sende- und Empfangsanordnung bekannt, bei der ein Stecker mit einem schräg ausgeschliffenen Lichtwellenleiterende relativ zu einem optisch aktiven Element justierbar angeordnet ist. Der Stecker mit dem Lichtwellenleiterende wird dazu in eine Steckerhalterung in Form eines hohlzylindrischen Körpers mit einem Anschlag an einem Ende eingebracht. Der Anschlag weist eine koaxiale Bohrung auf.

Es ist Aufgabe der Erfindung eine Vorrichtung zum Fixieren und Positionieren eines in einer Hülse gefassten Lichtleitfaserendes anzugeben, die sowohl eine axiale als auch eine radiale Positionierung eines Lichtleitfaserendes mit einer abgeschrägten oder senkrecht zur optischen Achse verlaufenden Stirnfläche erlaubt. Weiter soll eine Verwendung einer solchen Vorrichtung angegeben werden.Die Aufgabe wird in Bezug auf die Vorrichtung mit einer Vorrichtung mit folgenden Merkmalen gelöst:

Ein in einer Hülse gefasstes Lichtleitfaserende weist eine abgeschrägte Stirnfläche auf; die Hülse weist auf der Seite mit der Stirnfläche der Lichtleitfaser eine Stirnfläche auf, die zumindest im Bereich nahe dem Lichtleitfaserende abgeschrägt ist; es ist ein hohlzylindrischer Körper vorgesehen, in den die Hülse koaxial einbringbar ist; der hohlzylindrische Körper weist an einem Ende einen Anschlag mit einer koaxialen Bohrung auf; der Anschlag ist zum Inneren des hohlzylindrischen Körpers hin koaxial zur Bohrung kegelförmig ausgestaltet und die Bohrung ist derart ausgestaltet, dass bei eingebrachter Hülse der abgeschrägte Bereich der Stirnfläche der Hülse den Anschlag berührt.

Die Aufgabe wird in Bezug auf die Vorrichtung auch mit einer Vorrichtung mit den Merkmalen des Patentanspruches 2 gelöst.

Vorteilhafte Weiterbildungen der Vorrichtungen sind in den Unteransprüchen 3 bis 6 angegeben. In Bezug auf die Verwendung wird die Aufgabe durch Verwendungen nach den Patentansprüchen 7 und 8 gelöst.

Durch eine erfindungsgemässe Anordnung ist es möglich, ein Lichtleitfaserende mit einer abgeschrägten Stirnfläche auch in axialer Richtung definiert zu Positionieren. Dabei dient gemäss Anspruch 1 ein kegelförmig ausgestalteter Anschlag als Anschlag für den abgeschrägten Bereich der Stirnfläche der Hülse, in der das Lichtleitfaserende gefasst ist. Eine seitliche Führung im hohlzylindrischen Körper wird dadurch erreicht, dass der hohlzylindrische Körper beziehungsweise die Hülse, in der die Lichtleitfaser gefasst ist, in ihrem Aussendurchmesser beziehungsweise in ihrer lichten Weite aufeinander abgestimmt sind. Eine sehr genaue Öffnung im hohlzylindrischen Körper kann beispielsweise dadurch erreicht werden, dass der hohlzylindrische Körper auf der Innenseite ein Keramikrohr aufweist oder vollständig aus Keramik hergestellt ist.

Es ist besonders wichtig, dass der Anschlag aus einem harten Material hergestellt ist, um einer Abnutzung durch das mehrfache Einbringen von in Hülsen gefassten Fasern entgegenzuwirken. Die Anordnung ist insbesondere dazu geeignet, dass auch bei mehrfachem Austauschen der in Hülsen gefassten Fasern für alle Fasern eine genaue Justierung und Positionierung erreicht wird. Eine Abnutzung des kegelförmigen Anschlages wird auch dadurch vermieden, dass der Winkel zwischen dem Mantel des kegelförmigen Anschlages und der Kegelachse dem spitzen Winkel zwischen dem geneigten Bereich und der Achse der Hülse entspricht.

Durch eine erfindungsgemässe Anordnung gemäss Anspruch 2 ist es möglich, ein Lichtleitfaserende mit einer abgeschrägten oder mit einer senkrecht zur optischen Achse verlaufenden Stirnfläche in axialer Richtung definiert zu positionieren. Durch die besondere Ausgestaltung des Anschlages mit einer abgeschrägten Teilebene und einer senkrecht zur optischen Achse verlaufenden Teilebene ist es möglich mit einer einzigen Anordnung sowohl geneigte Lichtwellenleiterenden, als auch senkrecht zur optischen Achse verlaufende Lichtwellenleiterenden definiert zu kontaktieren. Es ist besonders vorteilhaft, dass dies mit einer einzigen Einrichtung erfolgen kann.

Die Herstellung eines solchen besonders ausgebildeten Anschlages kann erfolgen, indem aus einer Ebene eine Vertiefung herausgefräst wird, wodurch die geneigte Teilebene geschaffen wird. Es ist insbesondere sinnvoll, den Anschlag in zwei Hälften zu teilen, wobei die eine Hälfte der einen Teilebene und die zweite der zweiten Teilebene entspricht. Die Grenzlinie der Hälften verläuft entsprechend durch die optische Achse.

Die erfindungsgemässe Vorrichtung kann besonders vorteilhaft zur Positionierung von Lichtleitfaserenden relativ zu optoelektronischen Sende- oder Empfangselementen eingesetzt werden. Dazu ist der hohlzylindrische Körper Teil eines Gehäuses, in das das optoelektronische Bauelement aufgenommen ist. Das optoelektronische Bauelement ist gegenüber der Bohrung fest positioniert oder justierbar angebracht. Gehäuse, hohlzylindrischer Körper und Anschlag können sowohl einteilig als auch als mehrere miteinander verbundene Teile aus ausgeführt sein. Durch die Einführung einer gefassten Lichtleitfaser in den hohlzylindrischen Körper ist dann gewährleistet, dass diese gegenüber dem optoelektronischen Bauelement genau positioniert ist. Es ist auch möglich eine aktive Justierung des optoelektronischen Bauelementes vorzunehmen.

Um eine möglichst genaue Positionierung zu erreichen, sollte ein Anschlagen von Hülse und Anschlag möglichst nahe an der Faser erfolgen. Dies kann dadurch erreicht werden, dass die lichte Weite der Bohrung nur geringfügig grösser als der Durchmesser der Faser ist.

Es ist im Stand der Technik bekannt, die Stirnflächen von Lichtleitfasern ballig zu schleifen. Dies kann auch in Kombination mit einer schrägen Stirnfläche erfolgen. Die erfindungsgemässe Anordnung ist dazu geeignet auch eine so bearbeitete Faser axial auszurichten. Dabei kann auch der geneigte Bereich der Stirnfläche der Hülse leicht ballig geschliffen sein.

Mit der Erfindung wird eine hochpräzise Positionierung in Längsrichtung erreicht. Diese muss beispielsweise bei der Verbindung einer Lichtleitfaser mit einem Laser sehr genau sein, da das vom Laser emittierte Licht auf die Stirnfläche der Lichtleitfaser fokussiert sein muss, um einen hohen Einkopplungswirkungsgrad zu erreichen. Ein Problem ist, dass die Stirnfläche der Hülse etliche Toleranzen beinhaltet, wie Änderungen im Verrundungsradius einer balligen Stirnfläche, Toleranzen im Schrägwinkel, Toleranzen im Durchmesser des geneigten Bereiches. Der Einfluss der Toleranzen wird durch die Erfindung minimiert.

Ausführungsbeispiele der Erfindung werden anhand der Zeichnungen erläutert. Es zeigen:
Figur 1 eine schematische Darstellung einer erfindungsgemässen Vorrichtung nach Anspruch 1,
Figur 2 eine Anordnung zur Verwendung der erfindungsgemässen Vorrichtung nach Figur 1,
Figur 3 eine schematische Darstellung einer erfindungsgemässen Vorrichtung nach Anspruch 2 unter Ankopplung eines Lichtleitfaserendes dessen Stirnfläche abgeschrägt ist,
Figur 4 eine schematische Darstellung derselben erfindungsgemässen Vorrichtung mit einem Lichtwellenleiterende dessen Stirnfläche senkrecht zur optischen Achse verläuft,
Figur 5 eine Anordnung zur Verwendung der erfindungsgemässen Vorrichtung nach den Figuren 3 und 4, wobei der Träger für das optoelektronische Bauelement und die Linse noch nicht eingebracht sind,
Figur 6 die Anordnung nach Figur 5 im zusammengefügten Zustand und
Figur 7 eine Aufsicht auf das in den Figuren 5 und 6 dargestellte Gehäuse.

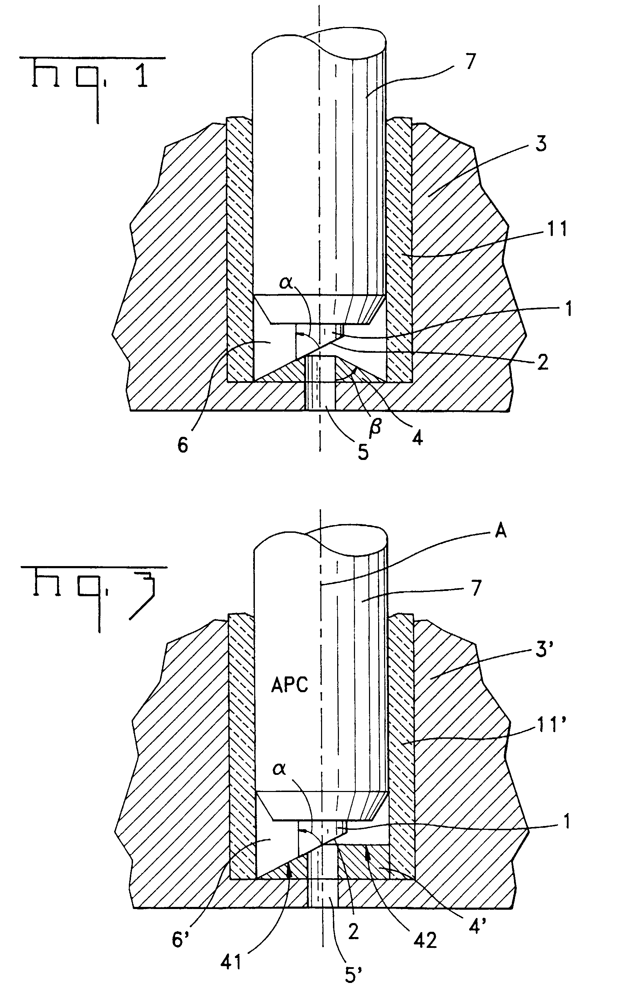

In Figur 1 ist eine erfindungsgemässe Vorrichtung dargestellt. Es ist eine Hülse 7, in der ein Lichtleitfaserende gefasst ist, zu erkennen. Das Lichtleitfaserende weist eine abgeschrägte Stirnfläche auf. Die Hülse 7 weist an dem Ende mit der Stirnfläche des Lichtleitfaserendes einen Stift 1 auf, von kleinerem Durchmesser als die Hülse 7. Die Stirnfläche der Hülse 7 weist also eine Stufe auf, wobei der Stift 1 in einem abgeschrägten Bereich 2 endet. Der abgeschrägte Bereich 2 verläuft koplanar mit der abgeschrägten Stirnfläche des Lichtleitfaserendes. Die Stirnfläche ist gegenüber der Achse des Lichtleitfaserendes beziehungsweise der Hülse, also der optischen Achse, um einen Winkel α geneigt. Es ist beispielsweise auch möglich, dass der abgeschrägte Bereich 2 und die Stirnfläche der Lichtleitfaser zusätzlich zur Neigung ballig ausgebildet sind, also nach aussen gewölbt sind.

Eine weitere mögliche Ausführung besteht darin, dass die gesamte Stirnfläche der Hülse geneigt ist, also keine zusätzliche Stufe aufweist. Sie kann auch leicht ballig ausgeführt sein.

Die Hülse 7 kann beispielsweise metallisch oder aus Keramik sein. Das Lichtleitfaserende ist mit der Hülse 7 in einen hohlzylindrischen Körper 3 koaxial zur Achse dieses hohlzylindrischen Körpers einbringbar. Der hohlzylindrische Körper 3 kann im Inneren ein Rohr, beispielsweise ein Keramikrohr 11, aufweisen. Ein solches Rohr ist mit einem sehr präzisen Innendurchmesser herstellbar, derart, dass eine hochpräzise Führung der Hülse 7 im zylindrischen Körper 3 erreicht wird. Der zylindrische Körper 3 weist an einem Ende einen Anschlag 4 auf. Dieser Anschlag 4 kann Teil des zylindrischen Körpers 3 oder auch ein separates Teil sein. Er weist eine Bohrung 5 auf, die koaxial zur Achse des hohlzylindrischen Körpers 3 verläuft. Der Anschlag 4 ist zum Inneren 6 des hohlzylindrischen Körpers 3 hin kegelförmig ausgestaltet, wobei die Kegelachse mit der Achse der Bohrung 5 zusammenfällt. Es ist besonders vorteilhaft, wenn der Winkel zwischen dem Kegelmantel und der Kegelachse β dem Winkel α zwischen der Stirnfläche und der Achse des Lichtleitfaserendes entspricht.

Durch die in Figur 1 dargestellte Anordnung ist es möglich,
eine abgeschrägte und eventuell ballig geschliffene Lichtleitfaser in einer bestimmten Entfernung zu einem bestimmten Punkt auf der Achse des hohlzylindrischen Körpers zu justieren. Der geneigte Bereich 2 der Stirnfläche der Hülse 7 schlägt gegen den Kegelmantel des Anschlags 4 an. Der Durchmesser der Bohrung 5 ist darum kleiner als der Aussen-durchmesser des Stiftes. Die lichte Weite der Bohrung 5 sollte grösser als der Durchmesser der Lichtleitfaser sein, um die Stirnfläche der Faser nicht zu beschädigen. Um eine hohe Genauigkeit zu erreichen, ist es sinnvoll, den Berührungspunkt von Anschlag und geneigtem Bereich möglichst nahe an der Faser vorzusehen.

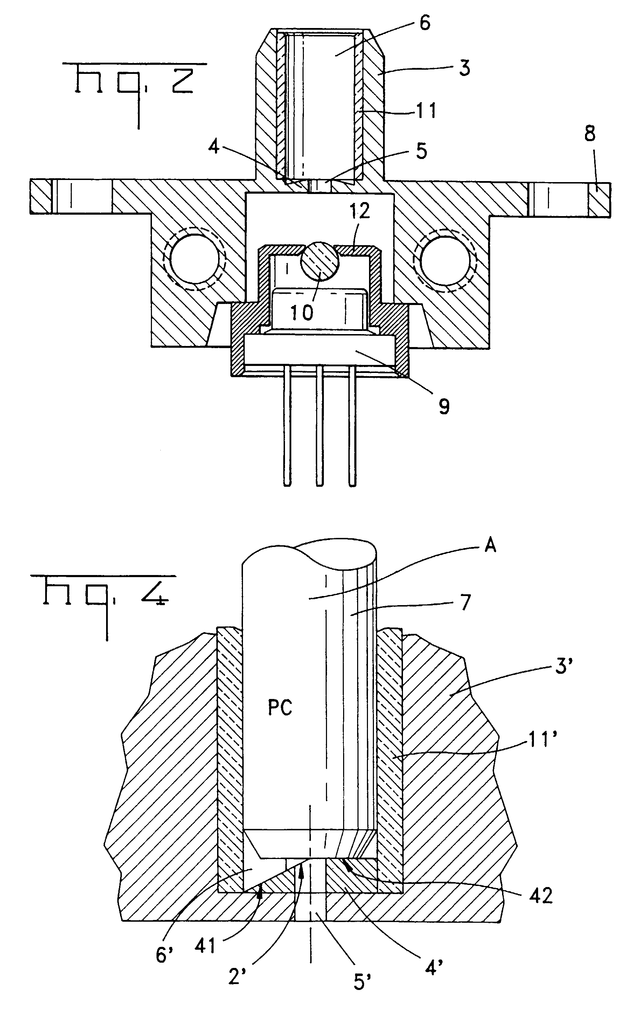

In Figur 2 ist eine Verwendung der in Figur 1 dargestellten Anordnung dargestellt. Der hohlzylindrische Körper 3 ist Teil eines metallischen Gehäuses 8, das zusätzlich eine Aufnahme für ein optoelektronisches Sende- oder Empfangselement und ein zusätzliches optisches Element aufweist. Das optische Element ist in diesem Fall eine Kugellinse 10, die in Bezug auf die Achse des hohlzylindrischen Körpers fixiert ist. Es ist eine Linsenhalterung vorgesehen, in der das optoelektronische Sende- oder Empfangselement, beispielsweise ein Laser 9, fixiert ist. Durch die genaue Fixierung von hohlzylindrischem Körper 3 zu optoelektronischem Element 9 und Kugellinse 10, ist eine genaue Positionierung des Lichtleitfaserendes, das in den zylindrischen Körper einfügbar ist, in axialer und radialer Richtung relativ zu dem Laser 9 gewährleistet.

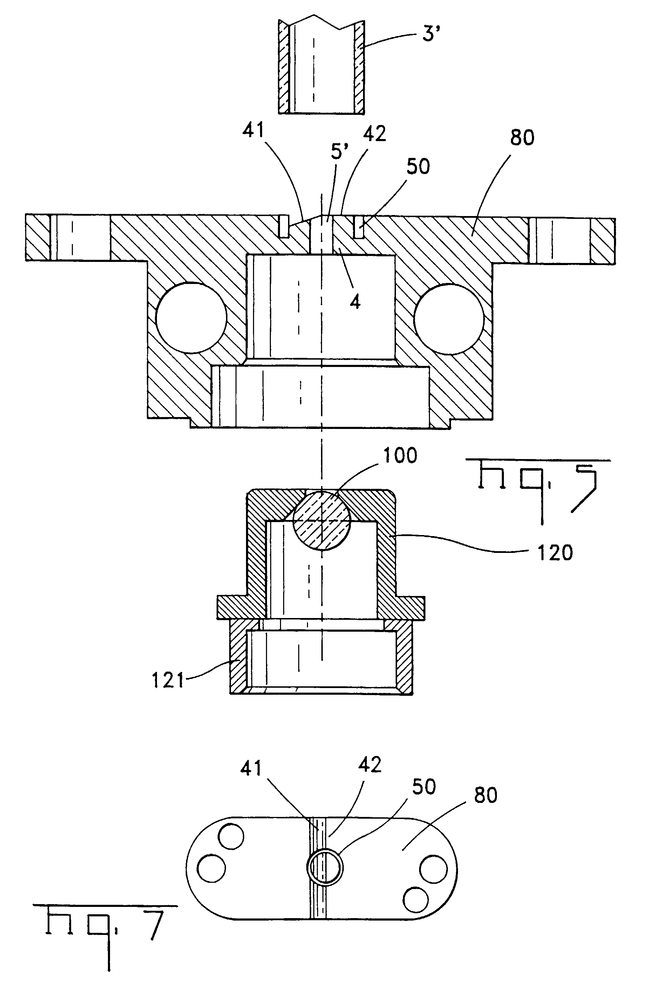

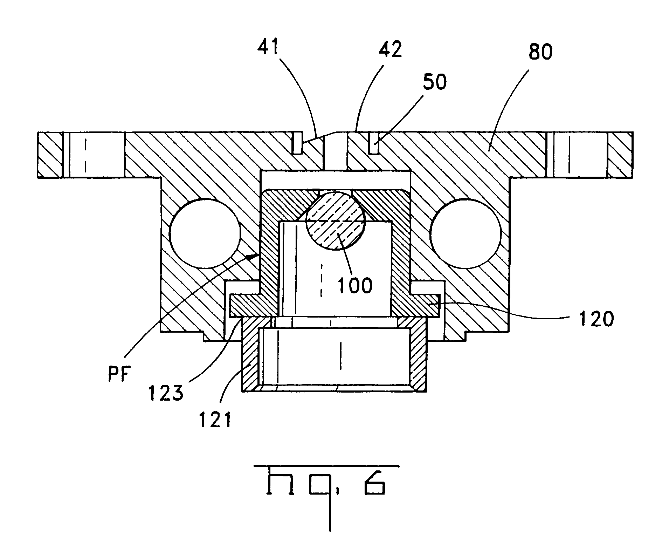

In den Figuren 3 und 4 ist jeweils eine erfindungsgemässe Vorrichtung nach Patentanspruch 2 dargestellt. In Figur 3 ist in diese Vorrichtung ein Lichtwellenleiter eingebracht, der in einer Hülse 7 gefasst ist und dessen Ende 2 geneigt zur optischen Achse verläuft. Die Hülse 7 weist an ihrem Ende einen Stift 1 mit geringerem Durchmesser auf, dessen Stirnfläche geneigt verläuft. Der abgeschrägte Bereich 2 verläuft koplanar mit der abgeschrägten Stirnfläche des Lichtleitfaserendes. Die Vorrichtung zum Positionieren weist einen zylindrischen Körper 3' auf. Das Lichtleitfaserende mit der Hülse ist in diesen hohlzylindrischen Körper 3' koaxial zur Achse des hohlzylindrischen Körpers 3' einbringbar. Der hohlzylindrische Körper 3' weist im Inneren ein Rohr, beispielsweise ein Keramikrohr 11' auf. An seinem Ende weist der zylindrische Körper 3' einen Anschlag 4' auf. In der Darstellung ist der Anschlag 4' als separates Teil ausgebildet, er kann aber auch Teil des zylindrischen Körpers 3' sein. Der Anschlag 4' weist eine Bohrung 5' auf, die koaxial zur Achse des hohlzylindrischen Körpers 3' verläuft. Der Anschlag 4' ist wie folgt ausgestaltet: Er besteht im Wesentlichen aus zwei Bereichen, wobei die Teilung der beiden Bereiche durch die optische Achse A verläuft. Der eine Bereich weist als Oberfläche eine Teilebene 42 auf, die senkrecht zur optischen Achse ausgerichtet ist, während der zweite Bereich eine Teilebene 41 aufweist, die entsprechend dem Winkel der Stirnfläche des Lichtleitfaserendes geneigt ist. Diese in Figur 3 dargestellte Vorrichtung zum Fixieren und Positionieren eines Lichtleitfaserendes ist besonders vorteilhaft, da sie sowohl zur Aufnahme eines geneigten Lichtleitfaserendes, als auch zur Aufnahme eines Lichtleitfaserendes, dessen Stirnfläche senkrecht zur optischen Achse A orientiert ist, geeignet ist.

In Figur 4 ist die in Figur 3 dargestellte Vorrichtung nochmals dargestellt, jedoch ist ein Lichtleitfaserende, das in einer Hülse 7' gefasst ist, dargestellt, dessen Stirnfläche senkrecht zur optischen Achse A verläuft.

Neben dem Vorteil, dass sowohl Lichtwellenleiter mit geneigten als auch mit senkrecht zur optischen Achse orientierten Endflächen eingebracht werden können, weist die Anordnung weiter den Vorteil auf, dass ein Lichtleitfaserende mit einer geneigten Stirnfläche nur in einer Orientierung in die Vorrichtung einbringbar ist. Dies ist aus dem Grunde von Vorteil, dass dadurch sichergestellt werden kann, dass eine reproduzierbare Ankopplung erfolgen kann.

In den Figuren 5 bis 7 ist nun eine spezielle Ausführung einer Anordnung gemäss den Figuren 3 und 4 dargestellt. Es ist die Verwendung einer Anordnung zur Ankopplung eines Lichtwellenleiterendes an ein optoelektronisches Sende- oder Empfangselement dargestellt. Es ist ein Gehäuse 80 vorgesehen, das die Bohrung 5' und den Anschlag 4 aufweist, sowie eine Öffnung zur Aufnahme einer Linsenhalterung 120, und einer Haltung 121 für das optoelektronische Sende- oder Empfangselement. Der hohlzylindrische Körper 3' besteht beispielsweise aus einem keramischen Rohr, dass in eine entsprechende Nut 50 im Gehäuse 80 eingebracht wird. Wie in Figur 7 aus der Aufsicht zu erkennen, ist die Oberfläche des Gehäuses 80 bereichsweise mit einer im Querschnitt dreieckigen Nut versehen, durch die die zur optischen Achse geneigte Teilebene 41 gebildet wird. Der Bereich innerhalb der Nut 50, der als Anschlag dient, wird teilweise von der Teilebene 41 und teilweise von der Teilebene 42 gebildet. Dadurch entsteht die auch bereits in den Figuren 3 und 4 diskutierte Anordnung. Die Kugellinse befindet sich in der Kugellinsenhalterung 120, die in eine entsprechende zylindrische Öffnung des Gehäuses 80 einbringbar ist. Eine Befestigung der Kugellinsenhalterung 120 im Gehäuse 80 erfolgt durch einen Pressitz, wie er in der Figur 6 durch den Pfeil mit der Bezeichnung PF angedeutet ist. Dadurch ist es möglich, die Kugellinse in ihrer longitudinalen Position zur Endfläche des Lichtwellenleiters zu justieren. Das optoelektronische Element ist an einer weiteren Halterung 121 befestigt, die relativ zur Halterung der Kugellinse 120 in den Richtungen senkrecht zur optischen Achse bewegt werden kann. Eine Fixierung der beiden Halterungen zueinander, kann beispielsweise durch einen UV aushärtbaren Kleber 123 erfolgen. Es ist dabei von Vorteil, dass eine solche Justierung aktiv erfolgen kann. Nachdem die Fixierung mit dem UV aushärtbaren Kleber 123 erfolgt ist, ist es möglich, die beiden Halterungen 120 und 121 im Gehäuse 80 komplett zu vergiessen, indem die Zwischenräume mit einem entsprechendem Klebstoff oder einer entsprechenden Masse ausgefüllt werden.

Durch die in den Figuren 5 bis 7 angegebene Anordnung ist es möglich, eine aktive Fixierung in allen drei möglichen Achsen zwischen Lichtwellenleiterende und optoelektronischem Bauelement durchzuführen.

## Patentansprüche

1. Vorrichtung zum Fixieren und Positionieren eines Lichtleitfaserendes (1), das in einer Hülse gefasst ist, wobei das Lichtleitfaserende (1) eine abgeschrägte Stirnfläche aufweist und die Hülse (7) auf der Seite mit der Stirnfläche des Lichtleitfaserendes (1) eine Stirnfläche aufweist, die zumindest nahe dem Lichtleitfaserende (1) einen abgeschrägten Bereich (2) hat, wobei ein hohlzylindrischer Körper (3) vorgesehen ist, in den die Hülse (7) koaxial einbringbar ist, und der an einem Ende einen Anschlag (4) mit einer koaxialen Bohrung (5) aufweist und wobei die Bohrung (5) derart ausgestaltet ist, dass bei eingebrachter Hülse (7) der abgeschrägte Bereich der Stirnfläche der Hülse (7) den Anschlag (4) berührt, dadurch gekennzeichnet, dass der Anschlag (4) zum Inneren (6) des hohlzylindrischen Körpers (3) hin koaxial zur Bohrung kegelförmig ausgestaltet ist.

2. Vorrichtung zum Fixieren und Positionieren eines Lichtwellenleitfaserendes, das in einer Hülse (7,7') gefasst ist, wobei das Lichtwellenleiterfaserende eine zur optischen Achse abgeschrägt oder senkrecht verlaufende Stirnfläche aufweist und die Hülse (7,7') auf der Seite mit der Stirnfläche des Lichtwellenleiterendes eine Stirnfläche (2,2') aufweist, die zumindest nahe dem Lichtleitfaserende koplanar zu dessen Stirnfläche ausgebildet ist, wobei ein hohlzylindrischer Körper (3) vorgesehen ist, in den die Hülse (7,7') koaxial einbringbar ist und der an einem Ende einen Anschlag (4') mit einer koaxialen Bohrung (5') aufweist und wobei die Bohrung (5') derart ausgestaltet ist, dass bei eingebrachter Hülse (7,7') der koplanar zur Stirnfläche des Lichtwellenleiterendes ausgebildete Bereich der Stirnfläche (2,2') der Hülse (7,7') den Anschlag (4) berührt, dadurch gekennzeichnet, dass der Anschlag (4') in zwei Teilebenen (41,42) geteilt ist, je auf einer Seite der Achse der Bohrung (5') eine Teilebene (41,42), wobei eine senkrecht und die andere geneigt zur optischen Achse verläuft.

3. Vorrichtung nach einen der Ansprüche 1 oder 2, dadurch gekennzeichnet, dass der hohlzylindrische Körper (3) und der Anschlag (4) als ein Teil ausgebildet sind.

4. Vorrichtung nach einem der Ansprüche 1 oder 2, dadurch gekennzeichnet, dass der Winkel zwischen der Oberfläche des kegelförmigen Anschlages (4) oder der geneigten Teilebene (41) und der optischen Achse (A) dem spitzen Winkel zwischen dem geneigten Bereich (2) und der Achse der Hülse (7) entspricht.

5. Vorrichtung nach einem der Ansprüche 1 bis 4, dadurch gekennzeichnet, dass der hohlzylindrische Körper (3) zumindest auf der dem Lichtleitfaserende (1) zugewandten Innenseite (6) aus Metall hergestellt ist.

6. Vorrichtung nach einem der Ansprüche 1 bis 5, dadurch gekennzeichnet, dass der Anschlag (4) aus Metall hergestellt ist.

7. Verwendung einer Anordnung nach einem der Ansprüche 1 bis 6, zur Positionierung eines Lichtleitfaserendes (1) in axialer und radialer Richtung relativ zu einem optoelektronischen Sende- oder Empfangselement.

8. Verwendung einer Vorrichtung nach einem der Ansprüche 1 bis 6, zur Positionierung eines in einer Hülse gefassten Lichtwellenleiterendes, mit einer abgeschrägten Stirnfläche des Lichtleitfaserendes und einem abgeschrägten Bereich (2) der Stirnfläche der Hülse (7), wobei diese eine leicht ballig ausgebildete Fläche bilden.

## Claims

1. Device for fixing and positioning an optical fibre end (1) which is held in a tube, wherein the optical fibre end (1) comprises a bevelled end face and the tube (7), on the side with the end face of the optical fibre end (1), comprises an end face having a bevelled region (2) at least in the vicinity of the optical fibre end (1), wherein a hollow cylindrical body (3) is provided into which the tube (7) can be inserted coaxially, and which comprises, at one end, a stop (4) with a coaxial bore (5) and wherein the bore (5) is so configured that, when the tube (7) is inserted, the bevelled region of the end face of the tube (7) contacts the stop (4), characterised in that the stop (4) has a conical configuration coaxially to the bore toward the interior (6) of the hollow cylindrical body (3).

2. Device for fixing and positioning an optical fibre end which is held in a tube (7, 7'), wherein the optical fibre end comprises an end face extending with a bevel or at right angles to the optical axis and the tube (7, 7'), on the side with the end face of the optical fibre end, comprises an end face (2, 2') which, at least in the vicinity of the optical fibre end, is coplanar to the end face thereof, wherein a hollow cylindrical body (3) is provided into which the tube (7, 7') can be inserted coaxially and which comprises, at one end, a stop (4') with a coaxial bore (5') and wherein the bore (5') is so configured that, once the tube (7, 7') is inserted, the region, coplanar to the end face of the optical fibre end, of the end face (2, 2') of the tube (7, 7') contacts the stop (4), characterised in that the stop (4') is divided into two partial planes (41, 42), with one partial plane (41, 42) on each side of the axis of the bore (5'), wherein one extends at right angles and the other at an inclination to the optical axis.

3. Device according to one of claims 1 or 2, characterised in that the hollow cylindrical body (3) and the stop (4) are formed as one part.

4. Device according to one of claims 1 or 2, characterised in that the angle between the surface of the conical stop (4) or the inclined partial plane (41) and the optical axis (A) corresponds to the acute angle between the inclined region (2) and the axis of the tube (7).

5. Device according to one of claims 1 to 4, characterised in that the hollow cylindrical body (3) is produced from metal, at least on the internal side (6) facing the optical fibre end (1).

6. Device according to one of claims 1 to 5, characterised in that the stop (4) is produced from metal.

7. Use of an arrangement according to one of claims 1 to 6, for positioning an optical fibre end (1) in an axial and radial direction relative to an optoelectronic transmitting or receiving element.

8. Use of a device according to one of claims 1 to 6, for positioning an optical fibre end held in a tube, with a bevelled end face of the optical fibre end and a bevelled region (2) of the end face of the tube (7), these end faces forming a slightly convex face.

## Revendications

1. Dispositif de fixation et de positionnement d'une extrémité de fibre optique (1), retenue dans une douille, l'extrémité de la fibre optique (1) comportant une surface frontale oblique et la douille (7) comportant sur le côté comportant la surface frontale de l'extrémité de la fibre optique (1) une surface frontale, comportant une zone oblique (2), du moins à proximité de l'extrémité de la fibre optique (1), un corps cylindrique creux (3) étant destiné à une insertion coaxiale de la douille (7) et comportant au niveau d'une extrémité une butée (4) avec un alésage coaxial (5), l'alésage (5) étant configuré de sorte que lors de l'insertion de la douille (7), la zone oblique de la surface frontale de la douille (7) touche la butée (4), caractérisé en ce que la butée (4) a une forme conique vers l'intérieur (6) du corps cylindrique creux (3), coaxialement à l'alésage.

2. Dispositif de fixation et de positionnement d'une extrémité de fibre optique, retenue dans une douille (7,7'), l'extrémité de la fibre optique comportant une surface frontale oblique par rapport à l'axe optique ou à extension perpendiculaire, et la douille (7, 7') comportant sur le côté comportant la surface frontale de l'extrémité de la fibre optique une surface frontale (2,2'), coplanaire à la surface frontale correspondante, du moins à proximité de l'extrémité de la fibre optique, un corps cylindrique creux (3) étant destiné à une insertion coaxiale de la douille (7) et comportant au niveau d'une extrémité une butée (4') avec un alésage coaxial (5'), l'alésage (5') étant configuré de sorte que lors de l'insertion de la douille (7, 7'), la zone de la surface frontale (2, 2') de la douille (7,7') coplanaire à la surface frontale de l'extrémité de la fibre optique touche la butée (4), caractérisé en ce que la butée (4') est divisée en deux plans partiels (41, 42), un plan partiel (41, 42) étant agencé de chaque côté de l'axe de l'alésage (5'), l'un s'étendant ainsi perpendiculairement à l'axe optique et l'autre étant incliné par rapport à l'axe optique.

3. Dispositif selon l'une des revendications 1 ou 2, caractérisé en ce que le corps cylindrique creux (3) et la butée (4) sont formés d'une seule pièce.

4. Dispositif selon l'une des revendications 1 ou 2, caractérisé en ce que l'angle entre la surface de la butée conique (4) ou du plan partiel incliné (41) et l'axe optique (1) correspond à l'angle aigu entre la zone inclinée (2) et l'axe de la douille (7).

5. Dispositif selon l'une des revendications 1 à 4, caractérisé en ce que le corps cylindrique creux (3) est composé de métal, du moins sur la face interne (6) orientée vers l'extrémité de la fibre optique (1).

6. Dispositif selon l'une des revendications 1 à 5, caractérisé en ce que la butée (4) est composée de métal.

7. Utilisation d'un dispositif selon l'une des revendications 1 à 6, servant au positionnement d'une extrémité de fibre optique (1) dans le sens axial et radial par rapport à un élément opto-électronique d'émission ou de réception.

8. Utilisation d'une dispositif selon l'une des revendications 1 à 6, servant au positionnement d'une extrémité de fibre optique retenue dans une douille, avec une surface frontale oblique de l'extrémité de la fibre optique et une zone oblique (2) de la surface frontale de la douille (7), celles-ci formant une surface légèrement convexe.
